# FASCICULE DE BREVET EUROPEEN

(11) **EP 1 550 468 B1**
(45) Date de publication et mention de la délivrance du brevet: **04.04.2007**
(21) Numéro de dépôt: 05290023.0
(22) Date de dépôt: 05.01.2005
(51) Int. Cl.: C11D 3/02

(54) **Procédé de fabrication d'une solution de chlorure de sodium et d'hypochlorite de sodium**
Verfahren zur Herstellung einer Lösung enthaltend Natriumchlorid und Natriumhypochlorid
Process for the production of a solution comprising sodium chloride and sodium hypochloride

(30) Priorité: 05.01.2004 FR 0450006
(43) Date de publication de la demande: 06.07.2005
(73) Titulaire: Laboratoires Rivadis, 79100 Thouars (FR)
(72) Inventeur: Laine, Christian, 79100 Thouars (FR)
(74) Mandataire: Sayettat, Julien Christian

(56) Documents cités:
- WO-A-01/20996
- US-A- 4 767 542

## Description

L'invention concerne un procédé de fabrication d'une solution aqueuse comprenant un mélange de chlorure de sodium et d'hypochlorite de sodium, ainsi qu'une solution aqueuse obtenue par un tel procédé.

Des solutions contenant du chlorure de sodium et de l'hypochlorite de sodium sont connues pour être désinfectantes et antiseptiques, grâce notamment aux propriétés bactéricides, fongicides, virucides, sporicides et sur les agents transmissibles non conventionnels (par exemple sur les prions) de l'hypochlorite de sodium, notamment la demande de brevet internationale WO 01/20996.

Pour assurer de façon efficace ses fonctions de désinfection et antiseptique, une telle solution doit avoir un degré de pureté suffisant. En outre, pour faciliter son utilisation, il est important qu'une telle solution soit stable dans le temps, et soit en outre non toxique, cette solution étant plus particulièrement destinée à un usage domestique mais également à un usage professionnel. La solution peut être utilisée en usage cutané, en application sur des surfaces ou pour des objets (sols, ustensiles, récipients, ...) ainsi que dans des liquides (par exemple désinfection de boissons).

Pour répondre à ces différentes contraintes, la demanderesse a effectué des essais intensifs et a pu déterminer des conditions de fabrication particulières de ladite solution qui lui assurent des caractéristiques optimales en termes de pureté, de non-toxicité et de stabilité dans le temps.

Plusieurs étapes spécifiques de filtration et de purification du mélange chlorure de sodium-hypochlorite de sodium sont prévues, ces étapes étant destinées à éliminer in situ, au cours du procédé, notamment les impuretés métalliques qui pourraient contaminer la solution.

A cet effet, et selon un premier aspect, l'invention propose un procédé de fabrication d'une solution aqueuse comprenant un mélange de chlorure de sodium et d'hypochlorite de sodium, ladite solution étant destinée à un usage de désinfection et antiseptique, ledit procédé comprenant les étapes successives suivantes :
a) préparation d'une solution aqueuse de chlorure de sodium ;
b) filtration de ladite solution ;
c) addition d'hypochlorite de sodium dans ladite solution de sorte à former un mélange ;
d) addition de chlorure de calcium et de carbonate de sodium dans ladite solution de sorte à faire précipiter les impuretés notamment métalliques ;
e) filtration de ladite solution de sorte à obtenir une solution sensiblement exempte d'impuretés notamment métalliques.

Selon une réalisation, le procédé comprend, entre l'étape d) et l'étape e), une étape d') d'ajustement du pH de la solution à une valeur comprise entre 11 et 12, l'étape d) étant typiquement réalisée à un pH compris entre 5,5 et 9.

Cette étape d') peut être réalisée par addition d'hydroxyde de sodium, éventuellement complétée par du bicarbonate de sodium.

Selon une autre réalisation, l'étape d), et éventuellement l'étape d'), est réalisée sous agitation de sorte à homogénéiser la solution.

En particulier, entre la fin de l'addition de chlorure de calcium et de carbonate de sodium, et le début de la filtration, cette agitation est maintenue pendant au moins 15 minutes.

Le procédé peut également comprendre, entre les étapes d) et e), une étape d'analyse de la pureté de la solution de sorte à pouvoir ajuster, avant filtration, la quantité de chlorure de calcium et de carbonate de sodium, et éventuellement la valeur du pH, pour augmenter la quantité de précipité.

Selon une réalisation, et compte tenu de l'usage de la solution, le chlorure de sodium, l'hypochlorite de sodium, le chlorure de calcium et le carbonate de sodium sont de grade pharmaceutique.

Ces différentes réalisations contribuent à améliorer les performances du produit obtenu, aussi bien en termes de pureté qu'en termes de stabilité et de non toxicité. En particulier, la solution obtenue est isotonique.

Selon un deuxième aspect, l'invention a pour objet une solution aqueuse obtenue par un tel procédé, comprenant :
- 16,5% en poids de chlorure de sodium ;
- entre 1% et 2% en poids d'hypochlorite de sodium ;
- 0,1 % en poids de chlorure de calcium ;
- 0,0005% en poids de carbonate de sodium.

Cette solution peut comprendre en outre :
- 0,02% en poids d'hydroxyde de sodium ; et
- 0,01% en poids de bicarbonate de sodium, dans le cas où le pH de la solution est ajusté par l'addition de ces deux composants.

D'autres objets et avantages de l'invention apparaîtront au cours de la description qui suit.

Le procédé selon l'invention est destiné à fabriquer une solution contenant du chlorure de sodium et de l'hypochlorite de sodium, cette solution étant destinée à un usage de désinfection et antiseptique grâce notamment aux propriétés de l'hypochlorite de sodium.

Pour ce faire, le procédé comprend les étapes successives suivantes, indiquées par les lettres a) à e).

Dans une première étape a), une solution aqueuse de chlorure de sodium est tout d'abord préparée, par dissolution de chlorure de sodium dans de l'eau. Cette solution est ensuite filtrée (étape b), par exemple sur des filtres commercialisés par la société FSI (Filter Specialists International) GmbH sous la référence PONG 003 - BPONG - 003 - X01 qui comprend un média filtrant en polypropylène de 0,2 m².

Dans l'étape suivante c), de l'hypochlorite de sodium est additionné dans ladite solution de chlorure de sodium filtrée, de sorte à former un mélange. Ce mélange est de préférence réalisé sous agitation, le titre de l'hypochlorite de sodium additionné étant de 18%.

Puis, lorsque la totalité de l'hypochlorite de sodium a été additionnée dans la solution aqueuse de chlorure de sodium, on procède à l'étape d), qui consiste à additionner du chlorure de calcium et du carbonate de sodium dans ladite solution.

Cette étape d) est de préférence réalisée sous agitation.

L'étape d) a notamment pour fonction de faire précipiter les impuretés métalliques, ces impuretés étant principalement des ions métalliques issus des métaux lourds. D'autres éventuelles impuretés telles que des chlorates, des dichromates ou des permanganates peuvent également être éliminées lors de cette étape.

Les impuretés présentes dans la solution peuvent provenir par exemple des matières premières utilisées (chlorure de sodium, hypochlorite de sodium) mais également du relargage des ustensiles de fabrication ou d'autres sources potentiellement contaminantes.

Et l'élimination de ces impuretés in situ, au cours du procédé de fabrication de la solution aqueuse désinfectante, permet d'atteindre un degré de pureté optimal, et induit également une amélioration importante des propriétés de la solution en termes de non-toxicité et de stabilité.

Selon une réalisation, une étape d') peut être prévue entre les étapes d) et e). Cette étape d') consiste en un ajustement du pH de la solution à une valeur comprise entre 11 et 12. Elle est de préférence réalisée sous agitation.

L'ajustement du pH peut être réalisé par addition d'hydroxyde de sodium, sous forme de pastilles.

Si cela s'avère nécessaire, on peut prévoir d'additionner également du bicarbonate de sodium, sous forme de poudre, pour ajuster le pH à la valeur souhaitée.

L'ajustement de la valeur du pH à une valeur comprise entre 11 et 12 contribue à stabiliser la solution, et participe ainsi à améliorer ses propriétés de conservation dans le temps.

Selon un exemple particulier, l'agitation est maintenue pendant au moins 15 minutes entre la fin de l'addition de chlorure de calcium et de carbonate de sodium, et le début de l'étape suivante e), qui consiste en une filtration.

Ensuite, avant filtration, on peut laisser reposer la solution pendant plusieurs heures de sorte à améliorer le rendement de précipitation.

Dans l'étape suivante e), la solution est donc filtrée, de sorte à obtenir une solution finale sensiblement exempte d'impuretés notamment métalliques. Selon une réalisation, cette filtration est réalisée par l'intermédiaire de deux filtres successifs, par exemple des filtres commercialisés par la société FSI GmbH sous la référence PONG 003 - BPONG - 003 - X01.

En outre, une première étape d'analyse de la pureté du mélange peut être réalisée entre les étapes d) et e).

A cet effet, la pureté de la solution peut être analysée en mesurant la proportion de NaOCl, de calcium, d'ions métalliques lourds, en mesurant la densité de la solution à 15°C, ainsi qu'en réalisant des tests visuels.

Selon le résultat de cette analyse, on peut ainsi, le cas échéant, ajuster la quantité de chlorure de calcium et de carbonate de sodium, et éventuellement la valeur du pH, et ce avant l'étape e) de filtration. Ces ajustements ont pour fonction d'augmenter la quantité de précipité, et ainsi de réduire encore la quantité d'impuretés métalliques présents en solution.

Selon un exemple particulier, cette analyse de pureté, entre les étapes d) et e) est réalisée successivement à un temps t0, puis à un temps t0 + 1 heure, et à un temps t0 + 7 heures, de sorte à laisser reposer le mélange entre les différentes analyses.

En outre, après l'étape e) de filtration, une autre étape d'analyse de la pureté est réalisée sur la solution finale, de sorte à contrôler la qualité de cette solution.

Selon le mode de réalisation décrit, le pH de la solution finale est compris entre 11 et 12.

Cette solution finale est ensuite conditionnée en flacons. A ce stade, un contrôle de qualité peut également être réalisé, par exemple à une fréquence de 7 bouteilles contrôlées par heure.

Le procédé selon l'invention est mis en oeuvre dans un environnement contrôlé en matière de contamination. A cet effet, les appareillages et les locaux utilisés répondent aux critères habituellement mis en oeuvre dans l'industrie pharmaceutique. Ainsi, l'ensemble des matériaux de cuverie et de transfert sont exempts de parties métalliques. De plus, dans les salles de production, les systèmes de ventilation, le revêtement des sols, et la fréquence de nettoyage des salles sont prévus pour éviter tout risque de contamination, notamment par la poussière.

En outre, selon une réalisation, le chlorure de sodium, l'hypochlorite de sodium, le chlorure de calcium et le carbonate de sodium utilisés lors du procédé sont de grade pharmaceutique (« OTC-grade »). Bien que possédant un degré de pureté élevé, ces produits comprennent des impuretés métalliques, et la mise en oeuvre du procédé avec de tels produits contribue encore à améliorer les performances recherchées de la solution finale.

Selon un exemple particulier, le procédé décrit ci-dessus permet d'obtenir la solution aqueuse comprenant :
- 16,5% en poids de chlorure de sodium ;
- entre 1 % et 2% en poids d'hypochlorite de sodium ;
- 0,1 % en poids de chlorure de calcium ;
- 0,0005% en poids de carbonate de sodium.

Et, selon un exemple particulier, cette solution comprend en outre :
- 0,02% d'hydroxyde de sodium, et
- 0,01 % en poids de bicarbonate de sodium.

En particulier, selon le pourcentage d'hypochlorite de sodium utilisé, une telle solution est connue commercialement sous le nom de « fluide désinfectant Milton 1% », ou « fluide désinfectant Milton 2% », et possède des propriétés désinfectantes et antiseptiques reconnues.

Le fait de fabriquer cette solution par le procédé selon l'invention lui confère un degré de pureté et d'innocuité importants, et une stabilité dans le temps d'au minimum trois ans. Ces caractéristiques sont obtenues par la mise en oeuvre des différentes étapes de filtration et de purification au cours du procédé de fabrication.

En particulier, on obtient les puretés suivantes :
Pour le fluide désinfectant Milton 1 % :
   Densité mesurée à 15°C : 1,129 à 1,135
   Dosage de l'hypochlorite de sodium : 1,18 à 1,22 % m/v
   Dosage métaux lourd : Cuivre max. 0,06 ppm
      Fer max. 0,6 ppm
   Chlorate de sodium : max. 10% de l'hypochlorite de sodium
Pour le fluide désinfectant Milton 2% :
   Densité mesurée à 15°C : 1,137 à 1,145
   Dosage de l'hypochlorite de sodium : 2,31 à 2,52 % m/v
   Dosage métaux lourd : Cuivre max. 0,12 ppm
      Fer max. 1,2 ppm
   Chlorate de sodium : max. 10% de l'hypochlorite de sodium

Concernant la stabilité dans le temps de la solution obtenue, le dosage de l'hypochlorite de sodium en temps réel sur 36 mois à température ambiante montre une perte inférieure à 10% par rapport à la solution initiale. Ce résultat est également confirmé par un test avec une solution placée dans une étuve à 37°C pendant 3 mois.

Outre les étapes a) à e) décrites ci-dessus, différents facteurs contribuent à optimiser la pureté et la stabilité de la solution obtenue :
- la mise en oeuvre d'étapes d'analyse de la pureté en cours de procédé, permettant le cas échéant d'effectuer les ajustements nécessaires ;
- le contrôle du pH final de la solution, l'ajustement dudit pH étant réalisé en cours de procédé ;
- la qualité des produits chimiques utilisés lors du procédé ;
- l'environnement dans lequel est mis en oeuvre ledit procédé ; et
- les contrôles de qualité réalisés sur le produit fini, qui permettent de détecter et de corriger d'éventuelles anomalies.

## Revendications

1. Procédé de fabrication d'une solution aqueuse comprenant un mélange de chlorure de sodium et d'hypochlorite de sodium, ladite solution étant destinée à un usage de désinfection et antiseptique, **caractérisé en ce qu**'il comprend les étapes successives suivantes :
a) préparation d'une solution aqueuse de chlorure de sodium ;
b) filtration de ladite solution ;
c) addition d'hypochlorite de sodium dans ladite solution de sorte à former un mélange ;
d) addition de chlorure de calcium et de carbonate de sodium dans ladite solution de sorte à faire précipiter les impuretés notamment métalliques ;
e) filtration de ladite solution de sorte à obtenir une solution sensiblement exempte d'impuretés notamment métalliques.

2. Procédé selon la revendication 1, **caractérisé en ce qu**'il comprend, entre l'étape d) et l'étape e), une étape d') d'ajustement du pH de la solution à une valeur comprise entre 11 et 12.

3. Procédé selon la revendication 2, **caractérisé en ce que** l'étape d') est réalisée par addition d'hydroxyde de sodium.

4. Procédé selon la revendication 3, **caractérisé en ce que** l'étape d') est réalisée en outre par addition de bicarbonate de sodium.

5. Procédé selon l'une quelconque des revendications 1 à 4, **caractérisé en ce que** l'étape d), et éventuellement l'étape d'), est réalisée sous agitation.

6. Procédé selon la revendication 5, **caractérisé en ce que**, entre la fin de l'addition de chlorure de calcium et de carbonate de sodium, et le début de la filtration, l'agitation est maintenue pendant au moins 15 minutes.

7. Procédé selon l'une quelconque des revendications 1 à 6, **caractérisé en ce qu**'il comprend en outre, entre les étapes d) et e), une étape d'analyse de la pureté de la solution, de sorte à pouvoir ajuster, avant filtration, la quantité de chlorure de calcium et de carbonate de sodium, et éventuellement la valeur du pH, pour augmenter la quantité de précipité.

8. Procédé selon l'une quelconque des revendications 1 à 7, **caractérisé en ce que** le chlorure de sodium, l'hypochlorite de sodium, le chlorure de calcium et le carbonate de sodium sont de grade pharmaceutique.

9. Solution aqueuse obtenue par un procédé selon l'une quelconque des revendications 1 à 8, **caractérisée en ce qu**'elle comprend :
- 16,5% en poids de chlorure de sodium ;
- entre 1% et 2% en poids d'hypochlorite de sodium ;
- 0,1% en poids de chlorure de calcium ;
- 0,0005% en poids de carbonate de sodium.

10. Solution aqueuse selon la revendication 9, obtenue par un procédé selon l'une quelconque des revendications 4 à 7, **caractérisée en ce qu'**elle comprend en outre :
- 0,02% en poids d'hydroxyde de sodium ; et
- 0,01 % en poids de bicarbonate de sodium.

## Claims

1. A method for producing an aqueous solution comprising a mixture of sodium chloride and sodium hypochlorite, said solution being intended for disinfecting and antiseptic use, **characterised in that** it comprises the following successive steps:
a) preparation of an aqueous solution of sodium chloride;
b) filtering of said solution;
c) addition of sodium hypochlorite into said solution so as to form a mixture;
d) addition of calcium chloride and sodium carbonate into said solution so as to precipitate the impurities, in particular metallic impurities;
e) filtering of said solution so as to obtain a solution substantially free from impurities, in particular metallic impurities.

2. A method according to Claim 1, **characterised in that** it comprises, between step d) and step e), a step d') for adjusting the pH of the solution to a value lying between 11 and 12.

3. A method according to Claim 2, **characterised in that** step d') is implemented by addition of sodium hydroxide.

4. A method according to Claim 3, **characterised in that** step d') is also implemented by addition of sodium bicarbonate.

5. A method according to any one of Claims 1 to 4, **characterised in that** step d), and possibly step d'), is carried out under agitation.

6. A method according to Claim 5, **characterised in that**, between the end of the addition of calcium chloride and sodium carbonate and the start of filtration, the agitation is maintained for at least 15 minutes.

7. A method according to any one of Claims 1 to 6, **characterised in that** it also comprises, between steps d) and e), a step of analysing the purity of the solution, so as to be able to adjust, before filtration, the amount of calcium chloride and sodium carbonate, and possibly the value of the pH, in order to increase the amount of precipitate.

8. A method according to any one of Claims 1 to 7, **characterised in that** the sodium chloride, sodium hypochlorite, calcium chloride and sodium carbonate are of pharmaceutical grade.

9. An aqueous solution obtained by a method according to any one of Claims 1 to 8, **characterised in that** it comprises:
- 16.5% by weight of sodium chloride;
- between 1% and 2% by weight of sodium hypochlorite;
- 0.1% by weight of calcium chloride;
- 0.0005% by weight of sodium carbonate.

10. An aqueous solution according to Claim 9, obtained by a method according to any one of Claims 4 to 7, **characterised in that** it also comprises:
- 0.02% by weight of sodium hydroxide; and
- 0.01% by weight of sodium bicarbonate.

## Patentansprüche

1. Verfahren zur Herstellung einer wässerigen Lösung mit einer Mischung aus Natriumchlorid und Natriumhypochlorit, wobei die besagte Lösung für die Verwendung zur Desinfektion und als Antiseptikum bestimmt ist, **dadurch gekennzeichnet, daß** es folgende Schritte umfaßt:
a) Bereitung einer wässerigen Lösung mit Natriumchlorid;
b) Filterung der besagten Lösung;
c) Hinzufügung von Natriumhypochlorit zur besagten Lösung, damit eine Mischung entsteht;
d) Hinzufügung von Calciumchlorid und Natriumkarbonat zur besagten Lösung, damit die Unreinheiten und insbesondere diejenigen metallischer Herkunft ausgefällt werden;
e) Filterung der besagten Lösung, damit eine in etwa von Unreinheiten und insbesondere denjenigen metallischer Herkunft befreite Lösung entsteht;

2. Verfahren nach Anspruch 1, **dadurch gekennzeichnet, daß** es zwischen Schritt d) und dem Schritt e) einen Schritt d') mit Anpassung des pH-Werts der Lösung auf zwischen 11 und 12 umfaßt.

3. Verfahren nach Anspruch 2, **dadurch gekennzeichnet, daß** der Schritt d') durch Hinzufügung von Natriumhydroxid ausgeführt wird.

4. Verfahren nach Anspruch 3, **dadurch gekennzeichnet, daß** der Schritt d') ferner durch Hinzufügung von Natriumbicarbonat ausgeführt wird.

5. Verfahren nach einem beliebigen der vorstehenden Ansprüche 1 bis 4, **dadurch gekennzeichnet, daß** der Schritt d) und eventuell der Schritt d') unter Rühren ausgeführt werden.

6. Verfahren nach Anspruch 5, **dadurch gekennzeichnet, daß** zwischen dem Ende der Hinzufügung von Calciumchlorid und Natriumbicarbonat und vor dem Beginn der Filterung das Rühren mindestens 15 Minuten lang weiter ausgeführt wird.

7. Verfahren nach einem beliebigen der vorstehenden Ansprüche 1 bis 6, **dadurch gekennzeichnet, daß** es ferner zwischen den Schritten d) und e) einen Schritt mit Auswertung der Reinheit der Lösung umfaßt, damit vor der Filterung die Menge Calciumchlorid und Natriumbicarbonat und eventuell der pH-Wert angepaßt werden können, um die Menge der Ausfällung zu erhöhen.

8. Verfahren nach einem beliebigen der vorstehenden Ansprüche 1 bis 7, **dadurch gekennzeichnet, daß** das Natriumchlorid, das Natriumhypochlorit, das Calciumchlorid und das Natriumbicarbonat den pharmazeutischen Grad haben.

9. Wässerige Lösung, die durch ein Verfahren nach einem beliebigen der vorstehenden Ansprüche 1 bis 8 erzielt wurde, **dadurch gekennzeichnet, daß** sie enthält:
- 16,5 Gewichtsprozent Natriumchlorid;
- zwischen 1 und 2 Gewichtsprozent Natriumhypochlorit;
- 0,1 Gewichtsprozent Calciumchlorid;
- 0,0005 Gewichtsprozent Natriumkarbonat.

10. Wässerige Lösung nach Anspruch 9, die durch ein Verfahren nach einem beliebigen der vorstehenden Ansprüche 4 bis 7 erzielt wurde, **dadurch gekennzeichnet, daß** sie ferner enthält:
- 0,02 Gewichtsprozent Natriumhydroxid;
- 0,01 Gewichtsprozent Natriumbicarbonat.
